# EUROPEAN PATENT SPECIFICATION

(11) **EP 1 636 078 B1**
(45) Date of publication and mention of the grant of the patent: **27.12.2006**
(21) Application number: 04736405.4
(22) Date of filing: 09.06.2004
(51) Int. Cl.: B60T 17/22, G01L 5/28, B60T 8/26, G01L 7/00

(54) **VALVE DIAGNOSTIC TOOL**
DIAGNOSEWERKZEUG FÜR EIN VENTIL
OUTIL DE DIAGNOSTIC POUR UNE VALVE

(30) Priority: 13.06.2003 GB 0313742
(43) Date of publication of application: 22.03.2006
(73) Proprietor: CURRY, Charles Edward, Coventry CV4 7AY (GB)
(72) Inventor: CURRY, Charles Edward, Coventry CV4 7AY (GB)
(74) Representative: Symons, Rupert Jonathan
(86) International application number: PCT/GB2004/002442
(87) International publication number: WO 2004/110841

(56) References cited:
- WO-A-03/011669
- DE-A- 2 308 694
- US-A- 4 100 792
- US-A- 4 325 581
- US-A- 4 719 796
- US-A- 5 239 486
- US-A- 5 767 397

## Description

This invention relates to diagnostic tools and in particular to tools for checking the pressure within a flexible deformable hose in a hydraulic circuit. The invention has particular relevance to hydraulic brake circuits and for testing the correct functioning of pressure control valves in hydraulic brake systems.

Document DE-A-23 08 694 discloses in combination the following method steps of claim 1:

Applying a first clamping tool to a flexible hose, the first clamping tool comprising clamping means for clamping about the hose and incorporating a strain gauge for measuring strain of the clamping means as a result of pressure changes within the hose, the strain gauge being operable to produce a signal indicative of the pressure within the hose.

Furthermore said document discloses in combination the following features of claim 5:

A clamping tool comprising clamping means for clamping about a hose and incorporating a strain gauge for measuring strain of the clamping means as a result of pressure changes within the hose, the strain gauge being operable to produce a signal indicative of the pressure within the hose.

Brake pressure apportioning valves are fitted to most cars and vans that do not have anti locking brake systems (ABS), to prevent excessive brake pressure being applied to the rears wheels of the vehicle during emergency braking. Excessive rear brake pressure causes the rear wheels to lock before the front wheels and this usually results in instability and loss of control of the vehicle when braking harshly.

Also it is common practice to fit pressure conscious limit valves (PCLV) or pressure conscious reducing valves (PCRV) to car braking systems, or load conscious reducing valves (LCR) to the braking systems of light commercial vehicles and "people carriers". All of these valves are designed to restrict or control the pressure applied to the rear wheels, either in response to the pressure exceeding a pre-set value in the brake circuit to the rear wheels, or in response to varied loads carried by the vehicle. All of these valves can be prone to internal seizure resulting in the valve passing full pressure to the rear brakes under harsh braking conditions. LCR valves generally use an external lever linkage to the rear suspension (used to sense the vehicle's load condition via axle deflection) which can also be prone to seizure. The result is that the valve no longer modulates the rear line pressure appropriately, resulting in too much or too little rear braking depending on the lever position.

A vehicle with a failed valve will operate perfectly safely under normal driving conditions, as the vast majority of braking is undertaken at less 20%"g". The braking pressure associated with this level of braking is below that at which valve intervention is required. The driver may be totally unaware that a valve has failed until an emergency when the driver loses control of the vehicle.

The front and rear brake forces are measured at each annual MOT (UK Ministry Of Transport) test. However, as the tests for the front and rear axles are conducted independently, there is no way of measuring the relative levels of front and rear braking. Hence an excess of rear braking relative to the front will not be detected. A vehicle with failed valves will not fail a MOT test simply because the brake valve has failed. Therefore a vehicle may pass the legally required test and yet be totally unsafe on the road.

Currently the only method of ascertaining whether a valve has seized is to remove it from the vehicle and test it using pressure gauges. This is unsatisfactory as removal of the valve takes time and is difficult if the vehicle has corrosion around the unions. It may well be impossible to refit a valve once removed. Garages are unlikely to remove valves for test just in case they may be faulty, especially if valve removal introduces faults that were not present before removal.

There is therefore a need for a tool for testing the correct functioning of these types of valves that will be quick, easy, foolproof and non-intrusive (no opening of bleed screws or undoing pipes etc).

An object of the present invention is to provide a non-invasive method for monitoring the pressure within one or more flexible deformable hoses.

It is a further object of the present invention to provide a kit of parts for monitoring the correct functioning of pressure control valves in hydraulic circuits.

In one aspect the invention provides a non-invasive method of checking the functioning of a valve in the braking system of a vehicle while the valve is in situ, the method comprising:
applying a first clamping tool to a flexible hose of a front braking circuit;
applying a second clamping tool to a flexible hose of a rear braking circuit;
each tool comprising clamping means for clamping about the respective hose and incorporating a strain gauge for measuring strain of the clamping means as a result of pressure changes within the hose, the strain gauge being operable to produce a signal indicative of the pressure within the hose;
applying the brakes, and
comparing the signals generated by the strain gauges of the first and second tools under braking force to provide an indication of the pressure difference between the front and rear braking circuits and thereby check the functioning of the valve.

In a second aspect the invention provides a kit of parts for use in a non-invasive method of checking the functioning of a valve in the braking system of a vehicle while the valve is in situ, the kit comprising two clamping tools for clamping to a flexible hose of a front or rear braking circuit respectively and a comparison means, each tool comprising clamping means for clamping about a hose and incorporating a strain gauge for measuring strain of the clamping means as a result of pressure changes within the hose, the strain gauge being operable to produce a signal indicative of the pressure within the hose and the comparison means being arranged for comparing the signals generated by the strain gauges of both tools thereby to check the functioning of the valve.

The present invention will now be described by way of example with reference to the accompanying drawings in which:
Figure 1 is a diagram illustrating the characteristics of a functioning PCRV and a failed PCRV ;
Figure 2 is a diagram illustrating the characteristics of a functioning LCRV;
Figure 3 is a diagram illustrating the relationship between actual rear braking force and maximum safe rear braking force; and
Figure 4 illustrates a tool incorporating the present invention.

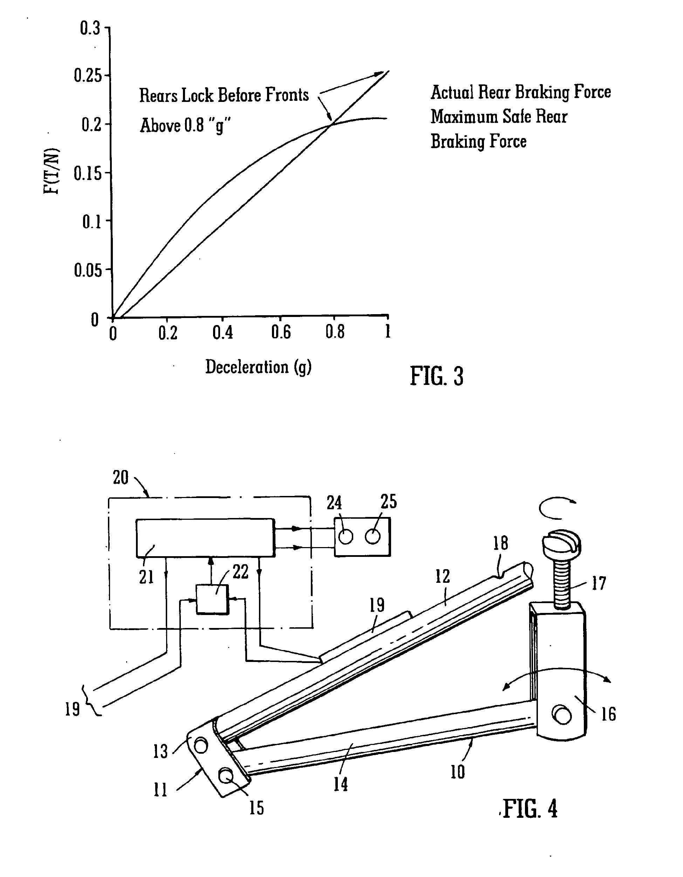

The tool 10 of the present invention as shown in Figure 4 relies on the fact that the normal failure mode for PCR, PCL or LCR valves is to fail "open" i.e. that they fail to cut-in at all. Hence the tool 10 needs only to sense whether the valve has cut-in or not in order to detect an internal valve fault in the valve.

In addition, the device can be used to check the cut-in of valve of a vehicle fitted with an LCR valve, with the suspension in each of two different positions, thereby determining whether the external linkage is seized. This function is achieved by monitoring any change in relative clamp force between front and rear hoses between the two axle positions.

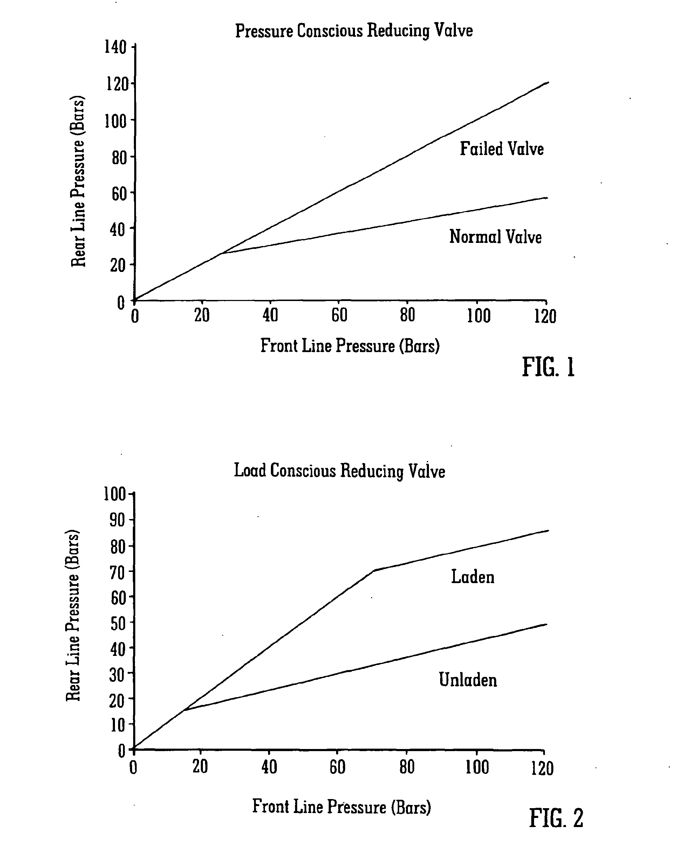

The characteristics of a functioning and failed PCR valve are shown in Figure 1. It can be seen that above the "cut-in" pressure, the valve modulates the rear line pressure and only allows through a proportion of any increase in front line pressure. A PCL valve allows no further pressure rise in the rear brake circuit above the cut-in value. When the valve has failed, no modulation of the rear line pressure occurs and the full front pressure is allowed through to the rear brakes.

The characteristics of a functioning LCR valve are shown in Figure 2. The valve functions in a similar way to a PCR valve. However, it can be seen that above the "cut-in" point the pressure depends on the load condition. When the valve linkage is seized, the valve cut-in pressure is not modulated effectively by changes in load condition.

If the LCR valve is seized internally, then the characteristics will be very similar to those of a failed PCR valve shown in Figure 1 for each load condition.

It can be seen from Figure 3, that it is only at very high levels of deceleration (in this case 0.8 G) that the rear braking is excessive, requiring valve modulation to prevent the rear wheels locking. Hence the driver is unaware of any problem with the braking system until the first time the driver needs to brake heavily under emergency conditions. Severe instability can occur at this point, resulting in the car spinning out of control.

Referring to Figure 4 there is shown a tool 10 comprising a brake hose clamping means in the form of clamp 11 that comprises a first arm 12 having a fitting 13 at one end, and a second pivotal arm 14 mounted on the fitting 13 so as to pivot about a pivot 15. A bracket 16 is pivotally mounted at the free end of the second arm 14. The bracket 16 is a substantially "U" shaped bracket that has a clamping screw 17 screwed into a tapped hole in the bracket. The free end of the first arm 12 is provided with a recess 18 into which the screw 17 engages when the free end of the first arm 12 is inserted into the bracket 16. One or both of the arms 12, 14 is provided with a strain gauge 19 in accordance with the present invention that monitors the deflection of the arm to which it is fitted.

In use the tool is assembled around a flexible deformable brake hose the internal pressure of which is to be monitored whilst operating the brakes. The tool is assembled to trap the hose between the arms 12, 14 and the arms 12, 14 are clamped in place around an non-pressurised hose by tightening the screw 17. The hose is clamped sufficiently to cause a restriction to the flow of hydraulic fluid in the hose, or to completely block off the flow in the hose. The strain gauge 19 senses the relative change in pressure within the hose as the brakes are applied. Two tools 10 are used simultaneously; one to test the front brake circuit and the other to test the rear brake circuit so that the relative pressures of the front and rear brakes are indirectly sensed. The strain gauges 19 of both tools are connected to a control unit 20 containing a microprocessor 21. This unit 20 provides a power supply to the strain gauges 19 and compares the signals from each of the strain gauges 19 of the clamps mounted on the front and rear hoses.

Starting with a pre-set clamp load of, say, 500N, the device detects the strain at zero line pressure. The brakes are then steadily applied and the changes in front and rear clamp force are compared. On the basis of this comparison, the unit 20 makes a judgement as to whether the valve to be tested in the rear circuit has modulated the rear line pressure with respect to the front. The unit 20 then signals to the operator either a green (pass) or red (fail) light 22, 23 respectively, indicating respectively a working or faulty valve.

Similarly vehicles fitted with an LCR valve would be subjected to a further test at a selected, i.e. different rear axle load (and hence different axle position) to verify that the valve cut-in pressure is modulated correctly. If the relationship of front to rear line pressure (i.e. the relative increases in front and rear clamp loads) is unchanged by the change in axle position, then the unit will signal that the LCR valve linkage is not working.

The design of tool 10 is not limited to that shown providing that the clamping means incorporates means such as the strain gauges for monitoring the pressure changes within the flexible deformable hose. For example the tool 10 may comprise a pair of parallel or hinged jaws (not shown) that are assembled around the hose and clamped together by tightening one or two screws.

In the examples described above the internal pressure within the front and rear brake systems is used to provide an indication of whether or not the valve is working. Other parameters could be used. For example the strain gauges 19 would be used to monitor the pressure within the flexible hose as discussed above but the brake pedal position or the relative front and rear wheel brake torques could be used (for example by using a "rolling road" testing machine) to give an indication of the braking conditions during the test of the valve.

## Claims

1. A non-invasive method of checking the functioning of a valve in the braking system of a vehicle while the valve is in situ, the method comprising
applying a first clamping tool (10) to a flexible hose of a front braking circuit;
applying a second clamping tool (10) to a flexible hose of a rear braking circuit;
each tool comprising clamping means (11-17) for clamping about the respective hose and incorporating a strain gauge (19) for measuring strain of the clamping means (11-17) as a result of pressure changes within the hose, the strain gauge (19) being operable to produce a signal indicative of the pressure within the hose;
applying the brakes, and
comparing the signals generated by the strain gauges (19) of the first and second tools under braking force to provide an indication of the pressure difference between the front and rear braking circuits and thereby check the functioning of the valve.

2. A method according to claim 1, wherein the clamping means (11-17) of each tool comprises two arms (12, 14), one of which is pivotally mounted on the other and bracket means (16, 17) for clamping the arms together thereby to squeeze and trap the hose between the arms and said strain gauge is provided on one or both arms.

3. A method according to claim 2, wherein the bracket means is a substantially "U" shaped bracket (16) that is pivotally attached to an end of one of the arms and is shaped to receive a free end (18) of the other arm, and said bracket is provided with a screw (17) that operates on the other arm to squeeze the arms together.

4. A method according to any preceding claim, wherein the braking system is associated with a load conscious reducing valve (LCRV), and including the further step of carrying out the method at a selected rear axle load to verify that the LCRV is modulated correctly.

5. A kit of parts for use in a non-invasive method of checking the functioning of a valve in the braking system of a vehicle while the valve is in situ, the kit comprising two clamping tools (10) for clamping to a flexible hose of a front or rear braking circuit respectively and a comparison means (20), each tool comprising clamping means (16, 17) for clamping about a hose and incorporating a strain gauge (19) for measuring strain of the clamping means as a result of pressure changes within the hose, the strain gauge (19) being operable to produce a signal indicative of the pressure within the hose and the comparison means (20) being arranged for comparing the signals generated by the strain gauges (19) of both tools (10) thereby to check the functioning of the valve.

## Patentansprüche

1. Nicht-invasives Verfahren zum Überprüfen des Funktionierens eines Ventils in dem Bremssystem eines Fahrzeugs, während das Ventil eingebaut ist, wobei das Verfahren umfasst:
- Ansetzen eines ersten Klemmwerkzeugs (10) an einem flexiblen Schlauch eines vorderen Bremskreises;
- Ansetzen eines zweiten Klemmwerkzeugs (10) an einem flexiblen Schlauch eines hinteren Bremskreises;
- wobei jedes Werkzeug ein Klemmmittel (11-17) zum Klemmen des jeweiligen Schlauches aufweist und einen Dehnungsmesser (19) zum Messen einer Dehnung des Klemmmittels (11-17) in Folge von Druckänderungen innerhalb des Schlauches umfasst, wobei der Dehnungsmesser (19) betreibbar ist, um ein den Druck innerhalb des Schlauches wiedergebendes Signal zu erzeugen;
- Betätigen der Bremsen; und
- Vergleichen der durch die Dehnungsmesser (19) des ersten und des zweiten Werkzeugs unter Bremskraft erzeugten Signale, um eine Angabe der Druckdifferenz zwischen dem vorderen und dem hinteren Bremskreis bereitzustellen und dabei das Funktionieren des Ventils zu überprüfen.

2. Verfahren nach Anspruch 1, wobei das Klemmmittel (11-17) jedes Werkzeugs zwei Arme (12, 14), von denen einer an dem anderen gelenkig angeordnet ist, und ein Klammermittel (16, 17) zum Zusammenklemmen der Arme, um dabei den Schlauch zwischen den Armen zu drücken und zu fassen, umfasst, wobei der Dehnungsmesser an einem oder beiden Arme vorgesehen ist.

3. Verfahren nach Anspruch 2, wobei das Klammermittel eine im Wesentlichen "U"-förmige Klammer (16) ist, die an einem Ende von einem der Arme gelenkig befestigt ist und geformt ist, um ein freies Ende (18) des anderen Arms aufzunehmen, und wobei die Klammer mit einer Schraube (17) versehen ist, welche auf den anderen Arm einwirkt, um die Arme zusammenzudrücken.

4. Verfahren nach einem der vorhergehenden Ansprüche, wobei das Bremssystem mit einem lastabhängigen Reduzierventil (LCRV) verknüpft ist und wobei der weitere Schritt umfasst: Ausführen des Verfahrens bei einer ausgewählten Hinterachslast, um zu prüfen, dass das LCRV korrekt angepasst wird.

5. Satz von Teilen zur Verwendung in einem nicht-invasiven Verfahren zum Überprüfen des Funktionierens eines Ventils in einem Bremssystem eines Fahrzeugs, während das Ventil eingebaut ist, wobei der Satz zwei Klemmwerkzeuge (10) zum Klemmen eines flexiblen Schlauches jeweils eines vorderen oder eines hinteren Bremskreises und ein Vergleichsmittel (20) umfasst, wobei jedes Werkzeug ein Klemmmittel (16, 17) zum Klemmen eines Schlauches aufweist und einen Dehnungsmesser (19) zum Messen einer Dehnung des Klemmmittels in Folge von Druckänderungen innerhalb des Schlauches umfasst, wobei der Dehnmesser (19) betreibbar ist, um ein den Druck innerhalb des Schlauches wiedergebendes Signal zu erzeugen, und wobei das Vergleichsmittel (20) dazu eingerichtet ist, die durch die Dehnungsmesser (19) von beiden Werkzeugen (10) erzeugten Signale zu vergleichen, um dabei das Funktionieren des Ventils zu überprüfen.

## Revendications

1. - Procédé non invasif de vérification du fonctionnement d'une valve dans le système de freinage d'un véhicule tandis que la valve est in situ, le procédé comprenant
l'application d'un premier outil de serrage (10) sur un tuyau flexible d'un circuit de freinage avant ;
l'application d'un second outil de serrage (10) sur un tuyau flexible d'un circuit de freinage arrière ;
chaque outil comprenant des moyens de serrage (11-17) à serrer autour du tuyau respectif et incorporant un tensiomètre (19) pour mesurer la tension des moyens de serrage à la suite des changements de pression à l'intérieur du tuyau, le tensiomètre (19) pouvant être actionné pour produire un signal indicateur de la pression à l'intérieur du tuyau ;
l'application des freins, et
la comparaison des signaux générés par les tensiomètres (19) des premier et second outils de serrage sous une force de freinage pour fournir une indication de la différence de pression entre les circuits de freinage avant et arrière et vérifier de ce fait le fonctionnement de la valve.

2. - Procédé selon la revendication 1, dans lequel les moyens de serrage (11-17) de chaque outil comprennent deux bras (12, 14), dont un est monté de manière pivotante sur l'autre et des moyens de support (16, 17) pour serrer les bras ensemble pour presser et bloquer de ce fait le tuyau entre les bras et ledit tensiomètre est fourni sur un des deux bras.

3. - Procédé selon la revendication 2, dans lequel le moyen de support est un support sensiblement en forme de « U » (16) qui est fixé de manière pivotante à une extrémité de l'un des bras et est formé pour recevoir une extrémité libre (18) de l'autre bras, et ledit support est muni d'une vis (17) qui agit sur l'autre bras pour presser les bras ensemble.

4. - Procédé selon l'une quelconque des revendications précédentes, dans lequel le système de freinage est associé à un limiteur asservi à la charge (LAC), et comprenant l'étape supplémentaire consistant à mettre en oeuvre le procédé à une charge d'essieu arrière choisie pour vérifier que le LAC est correctement modulé.

5. - Ensemble de pièces à utiliser dans un procédé non invasif de vérification du fonctionnement d'une valve dans un système de freinage d'un véhicule tandis que la valve est in situ, l'ensemble comprenant deux outils de serrage (10) à serrer sur un tuyau flexible d'un circuit de freinage avant ou arrière respectivement et un moyen de comparaison (20), chaque outil comprenant des moyens de serrage (16, 17) à serrer autour d'un tuyau et incorporant un tensiomètre (19) pour mesurer la tension des moyens de serrage à la suite des changements de pression à l'intérieur du tuyau, le tensiomètre (19) pouvant être actionné pour produire un signal indicateur de la pression à l'intérieur du tuyau et le moyen de comparaison (20) étant agencé pour comparer les signaux générés par les tensiomètres (19) des deux outils (10) pour vérifier de ce fait le fonctionnement de la valve.
